(19)

Europäisches
Patentamt

European
Patent Office

Office européen
des brevets

(11) **EP 3 683 695 A1**

(12) **EUROPEAN PATENT APPLICATION**
published in accordance with Art. 153(4) EPC

(43) Date of publication:
**22.07.2020 Bulletin 2020/30**

(21) Application number: **18854007.4**

(22) Date of filing: **29.06.2018**

(51) Int Cl.:
**G06F 16/00** (2019.01)

(86) International application number:
**PCT/JP2018/024837**

(87) International publication number:
**WO 2019/049483 (14.03.2019 Gazette 2019/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.09.2017 JP 2017173882**

(71) Applicant: **SCREEN Holdings Co., Ltd.**
**Kyoto-shi, Kyoto 602-8585 (JP)**

(72) Inventors:
• **YOSHIDA Akiko**
  **Kyoto-shi**
  **Kyoto 602-8585 (JP)**

• **KASUBUCHI Kiyotaka**
  **Kyoto-shi**
  **Kyoto 602-8585 (JP)**
• **YOSHIWA Takao**
  **Kyoto-shi**
  **Kyoto 602-8585 (JP)**
• **YAMASHITA Yoshio**
  **Kyoto-shi**
  **Kyoto 602-8585 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **SYNONYM DICTIONARY CREATION DEVICE, SYNONYM DICTIONARY CREATION PROGRAM, AND SYNONYM DICTIONARY CREATION METHOD**

(57)     A highly precise synonym determination is performed, and a synonym dictionary is automatically created from a text. Morpheme analysis is carried out on the text, the text is segmented into multiple words, and a morpheme-analyzed text is obtained. A topic classification is carried out on the morpheme-analyzed text, at least one topic word belonging to each topic is selected from the multiple words, and a reference word characterizing each topic is extracted from the at least one topic word. The multiple words are multidimensionally vectorized, and thereby multiple vectors respectively expressing the multiple words are obtained. At least one similar word is selected from the multiple words. The at least one similar word is selected, such that the similarity between the vector expressing the reference word and the vector expressing each similar word of the at least one similar word exceeds a set reference. The synonym dictionary is created in which at least a part of the at least one similar word has been registered.

FIG. 2

EP 3 683 695 A1

**EP 3 683 695 A1**

**Description**

Technical Field

The present invention relates to a synonym dictionary creation apparatus, a synonym dictionary creation program, and a synonym dictionary creation method that create a synonym dictionary.

Background Art

A synonym dictionary is used to absorb an orthographic variant when a document is searched or analyzed, for example.

In creating a synonym dictionary, a similarity between multiple words collected from a text is obtained, the similarity is used to perform synonym determination, and a synonym dictionary is created that registers words determined as synonyms by the synonym determination. The synonym determination may be performed based on a history of word use in search, analysis, or the like in a document, or on word attributes, such as context, notation, pronunciation, and a part of speech. A technique described in Patent Document 1 is an example of the former, and a technique described in Patent Document 2 is an example of the latter.

In the technique described in Patent Document 1, an interval relevance dictionary that defines relevance between words based on a search time interval of an identical user is created. Then, a time series relevance dictionary that defines relevance between words based on a time series correlation of frequency of use of each search words is created. The interval relevance dictionary and the time series relevance dictionary are used to group synonyms, and a synonym dictionary is created (paragraphs 0012, 0014, and 0033).

In the technique described in Patent Document 2, a reference vocabulary is acquired, and a synonym index for the reference vocabulary and a related vocabulary are obtained using the similarity of context, notation, pronunciation, and a part of speech. Then, based on the size of the synonym index, it is determined whether the related vocabulary is a synonym of the reference vocabulary. Thus, a synonym dictionary is output (paragraphs 0013, 0018, and 0022).

Prior Art Documents

Patent Documents

Patent Document 1: Japanese Patent Application Laid-Open No. 11-312168 (1999)
Patent Document 2: Japanese Patent Application Laid-Open No. 2013-16011

Summary

Problems to be Solved by the Invention

A conventional process of creating a synonym dictionary has such problems that a highly precise synonym determination cannot be performed, a synonym dictionary may not be created, and the creation of a synonym dictionary takes a lot of time.

For example, in the technique described in Patent Document 1, without a past search history, a highly precise synonym determination cannot be performed, or the synonym dictionary cannot be created.

In the technique described in Patent Document 2, since the reference vocabulary needs to be acquired, it takes time to acquire the reference vocabulary, and it takes an enormous amount of time to output a synonym dictionary. In addition, omission of a word occurs when a word that is included in a text and should be included in the synonym dictionary is not included in the synonym dictionary. A repetitive maintenance is required every time a word is omitted, taking an enormous amount of time to create the synonym dictionary. Furthermore, a highly precise synonym determination cannot be performed on the text including a vocabulary, such as a technical term, whose pronunciation and part of speech are not registered, or the text including synonyms whose pronunciation and part of speech are different from each other, for example.

The present invention is made to solve the above-described problems. To solve the problems, the present invention provides a synonym dictionary creation apparatus, a synonym dictionary creation method, and a synonym dictionary creation program that automatically generate a synonym dictionary from a text by a highly precise synonym determination.

**EP 3 683 695 A1**

Means to Solve the Problems

The present invention is directed to a synonym dictionary creation apparatus, a synonym dictionary creation program, and a synonym dictionary creation method.

In creating the synonym dictionary, morpheme analysis is performed on a text, the text is segmented into multiple words, and thereby a morpheme-analyzed text is obtained.

A topic classification is carried out on the morpheme-analyzed text, at least one topic word belonging to each topic is selected from the multiple words, and a reference word characterizing each topic is extracted from the at least one topic word.

The multiple words are multidimensionally vectorized, and thereby multiple vectors respectively expressing the multiple words are obtained.

At least one similar word is selected from the multiple words. In this case, a similarity between a vector expressing the reference word and a vector expressing each similar word of the at least one similar word exceeds a set reference.

The synonym dictionary is created in which at least a part of the at least one similar word has been registered.

Effects of the Invention

The present invention is to provide a synonym dictionary creation apparatus, a synonym dictionary creation method, and a synonym dictionary creation program that carry out a highly precise synonym determination and automatically generate a synonym dictionary from a text.

The object, features, aspects, and advantages of the present invention will be more apparent from the following detailed description and the accompanying drawings.

Brief Description of Drawings

Fig. 1 is a block diagram illustrating a hardware configuration of a synonym dictionary creation apparatus according to a first embodiment.

Fig. 2 is a block diagram illustrating a functional configuration of the synonym dictionary creation apparatus according to the first embodiment.

Fig. 3 is a flowchart showing processing performed by the synonym dictionary creation apparatus according to the first embodiment.

Fig. 4 is a schematic diagram showing an example of a data transition in the synonym dictionary creation apparatus according to the first embodiment.

Fig. 5 is a schematic diagram showing an example of a data transition in the synonym dictionary creation apparatus according to the first embodiment.

Fig. 6 is a schematic diagram showing an example of a data transition in the synonym dictionary creation apparatus according to the first embodiment.

Fig. 7 is a schematic diagram illustrating an example of a screen displayed in the synonym dictionary creation apparatus according to the first embodiment.

Description of Embodiment

1 Hardware configuration

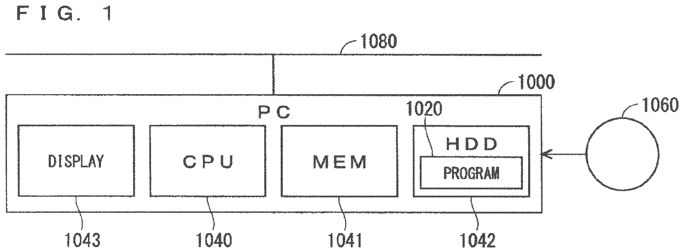

Fig. 1 is a block diagram illustrating a hardware configuration of a synonym dictionary creation apparatus according to a first embodiment.

The synonym dictionary creation apparatus 1000 illustrated in Fig. 1 is a personal computer (PC) in which a synonym dictionary creation program 1020 is installed, and includes a central processing unit (CPU) 1040, a memory 1041, a hard disk drive 1042, and a display 1043. The synonym dictionary creation apparatus 1000 may include a component other than the above components.

In the synonym dictionary creation apparatus 1000, the synonym dictionary creation program 1020 is installed in the hard disk drive 1042. For the installation of the synonym dictionary creation program 1020, data read from an external storage medium 1060, such as a compact disc (CD), a digital versatile disc (DVD), or a universal serial bus (USB) memory, may be written to the hard disk drive 1042, or data received via a network 1080 may be written to the hard disk drive 1042. The hard disk drive 1042 may be replaced with another type of auxiliary storage apparatus. For example, the hard disk drive 1042 may be replaced with a solid state drive or a random access memory (RAM) disk.

3

The hard disk drive 1042, the external storage medium 1060, the solid state drive, the RAM disk, and the like are computer-readable recording media that record the synonym dictionary creation program 1020.

In the synonym dictionary creation apparatus 1000, the synonym dictionary creation program 1020 installed in the hard disk drive 1042 is loaded into the memory 1041. The loaded synonym dictionary creation program 1020 is executed by the CPU 1040, and thereby the PC executes the synonym dictionary creation program 1020 to function as the synonym dictionary creation apparatus 1000.

2 Functional configuration

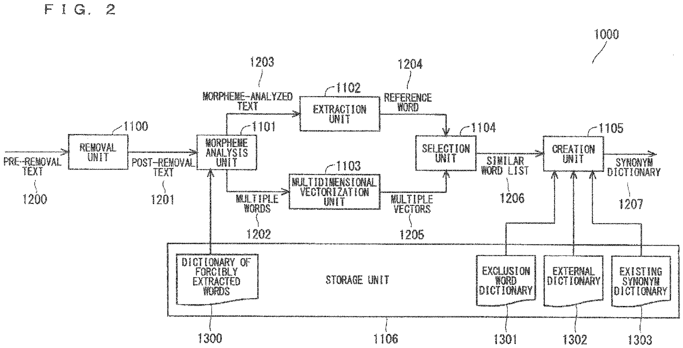

Fig. 2 is a block diagram illustrating a functional configuration of the synonym dictionary creation apparatus according to the first embodiment.

As illustrated in Fig. 2, the synonym dictionary creation apparatus 1000 includes a removal unit 1100, a morpheme analysis unit 1101, an extraction unit 1102, a multidimensional vectorization unit 1103, a selection unit 1104, a creation unit 1105, and a storage unit 1106. A synonym dictionary 1207 is automatically created from a text 1200 to be searched or analyzed. The synonym dictionary creation apparatus 1000 may include a component other than the above components. The storage unit 1106 stores a dictionary 1300 of forcibly extracted words, an exclusion word dictionary 1301, an external dictionary 1302, and an existing synonym dictionary 1303.

The removal unit 1100, the morpheme analysis unit 1101, the extraction unit 1102, the multidimensional vectorization unit 1103, the selection unit 1104, and the creation unit 1105 are configured through execution of the synonym dictionary creation program 1020 by the PC. The storage unit 1106 includes at least one of the memory 1041 and the hard disk drive 1042.

All or part of the processing performed by the CPU 1040 may be performed by a processor other than the CPU 1040. For example, all or part of the processing performed by the CPU 1040 may be performed by a graphics processing unit (GPU). All or part of the processing performed by the CPU 1040 may be performed by hardware that does not execute the program.

The removal unit 1100 removes a stop word from a pre-removal text 1200 from which the stop word has not been removed to obtain a post-removal text 1201 from which the stop word has been removed. When the removal of a stop word is unnecessary, for example, when the text 1200 to be searched or analyzed does not include a stop word, the removal unit 1100 may be omitted.

The morpheme analysis unit 1101 performs morpheme analysis on the post-removal text 1201 to segment the post-removal text 1201 into multiple words 1202 to obtain a morpheme-analyzed text 1203 including the multiple words 1202. The morpheme analysis unit 1101 uses the dictionary 1300 of forcibly extracted words in the morpheme analysis for the post-removal text 1201. The use of the dictionary 1300 of forcibly extracted words may be omitted.

The extraction unit 1102 performs a topic classification on the morpheme-analyzed text 1203, selects at least one topic word belonging to each topic from the multiple words 1202 included in the morpheme-analyzed text 1203, and extracts a feature word characterizing each topic from the at least one topic word belonging to each topic. The feature word that has been extracted becomes a reference word 1204 that is a reference for selecting a similar word.

The multidimensional vectorization unit 1103 multidimensionally vectorizes the multiple words 1202 to obtain multiple vectors 1205 respectively expressing the multiple words 1202.

The selection unit 1104 selects at least one similar word similar to the reference word 1204 from the multiple words 1202 to create a similar word list 1206 including the at least one similar word that has been selected. The selection unit 1104 selects the at least one similar word, such that a similarity between a vector expressing the reference word 1204 and a vector expressing each similar word of the at least one similar word exceeds a set reference.

The creation unit 1105 creates the synonym dictionary 1207 from the similar word list 1206, and saves the synonym dictionary 1207 that has been created. The creation unit 1105 organizes the at least one similar word included in the similar word list 1206 in creating the synonym dictionary 1207. The creation unit 1105 also uses the exclusion word dictionary 1301, the external dictionary 1302, and the existing synonym dictionary 1303 in creating the synonym dictionary 1207. Thus, at least a part of the at least one similar word included in the similar word list 1206 is registered in the synonym dictionary 1207. Organizing the at least one similar word may be omitted. Use of at least a part of the exclusion word dictionary 1301, the external dictionary 1302, and the existing synonym dictionary 1303 may be omitted. When organizing of the at least one similar word is omitted and the use of all of the exclusion word dictionary 1301, the external dictionary 1302, and the existing synonym dictionary 1303 is omitted, all of the at least one similar word included in the similar word list 1206 is registered in the synonym dictionary 1207.

In the synonym dictionary creation apparatus 1000, the reference word 1204 that is predicted to be used in the search or analysis is automatically extracted from the text 1200 to be searched or analyzed. The at least one similar word similar to the reference word 1204 that has been extracted is automatically selected from the text 1200. Then, at least a part of the at least one similar word that has been selected is automatically registered in the synonym dictionary 1207. Thus, a synonym dictionary 1207 that registers the at least one similar word similar to the reference word 1204 predicted to be used in the search or analysis is automatically created from the text 1200.

Further, in the synonym dictionary creation apparatus 1000, synonym determination is performed based on the similarity between the vector expressing the reference word 1204 and the vector expressing each word of the multiple words 1202. For this reason, a highly precise synonym determination is performed even without a history of word use in search, analysis, or the like in a document, or without word attributes, such as context, notation, pronunciation, and a part of speech. In particular, even when a technical term that is not registered in a general dictionary is included, the highly precise synonym determination is performed.

Further, in the synonym dictionary creation apparatus 1000, by using the topic classification performed on the text 1200 to be searched or analyzed, a feature word that is the reference word 1204 is extracted from the text 1200. Thus, a reference word group that covers words included in the text 1200 and predicted to be used in the search or analysis is extracted. Thus, the word predicted to be used in the search or analysis is unlikely to be dropped. On the contrary, in manual extraction of the reference word group by a human, the word predicted to be used in the search or analysis is likely to be dropped.

Further, in the synonym dictionary creation apparatus 1000, the morpheme analysis is performed on the text 1200 to be searched or analyzed to segment the text 1200 into the multiple words 1202. The at least one similar word is selected from the multiple words 1202 obtained from the segmentation. Then, at least a part of the at least one similar word that has been selected is automatically registered in the synonym dictionary 1207. Therefore, a synonym group that covers the synonyms included in the text 1200 is registered in the synonym dictionary 1207.

3 Examples of processing and data transition

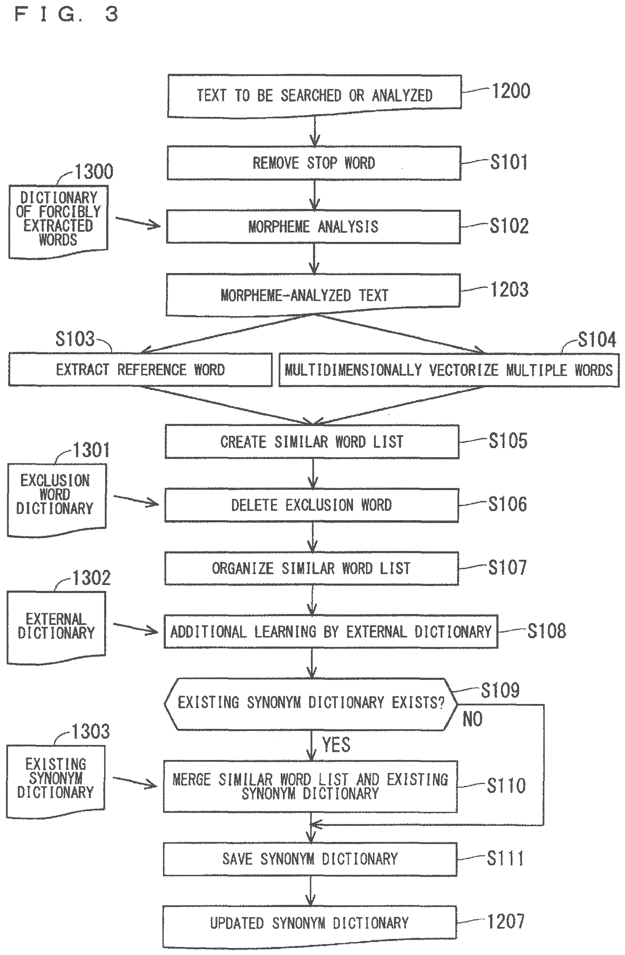

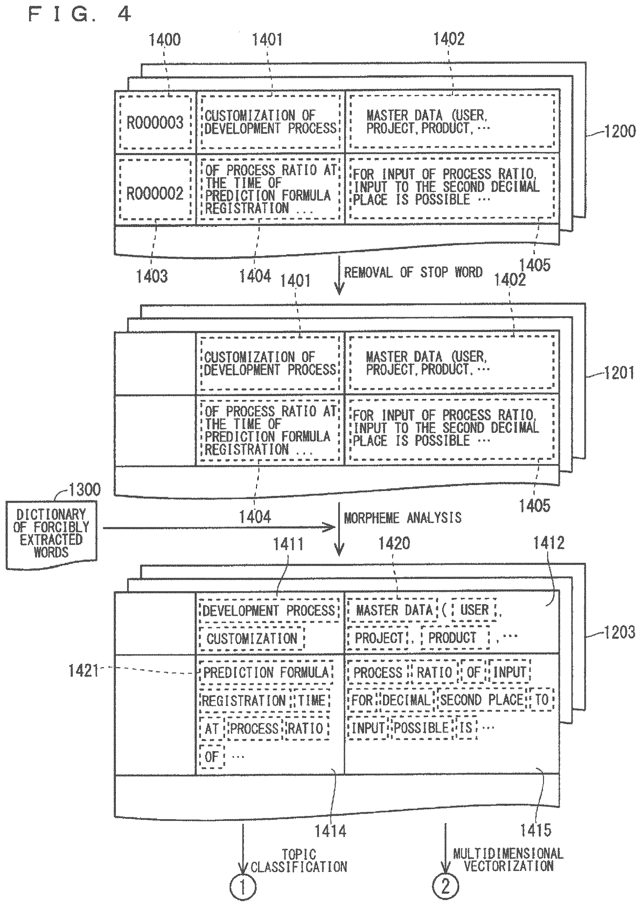

Fig. 3 is a flowchart showing processing performed by the synonym dictionary creation apparatus according to the first embodiment. Figs. 4, 5, and 6 are schematic diagrams each showing an example of a data transition in the synonym dictionary creation apparatus according to the first embodiment.

In step S101 illustrated in Fig. 3, the removal unit 1100 removes the stop word from the text 1200 to be searched or analyzed to obtain the post-removal text 1201. The stop word to be removed is a word that acts as noise unnecessary for a subsequent analysis. The word to be removed as the stop word is an identification code or the like that does not express a specific content of the text 1200. Character strings that are commonly included in various URLs such as "http://" are also removed as the stop words. In the example shown in Fig. 4, a text element 1400 "R000003", a text element 1401 "customization of development process", a text element 1402 "master data (user, project, product,...)", a text element 1403 "R000002", a text element 1404 "of process ratio at the time of prediction formula registration...", and a text element 1405 "for input of process ratio, input to the second decimal place is possible..." are included in the text 1200. The text elements 1400 and 1403 are removed as stop words.

In step S102 following step S101, illustrated in Fig. 3, the morpheme analysis unit 1101 performs the morpheme analysis on the post-removal text 1201, and segments the post-removal text 1201 into the multiple words 1202. Then, the morpheme-analyzed text 1203 including the multiple words 1202 is obtained. In the example illustrated in Fig. 4, the text element 1401 is segmented into multiple words 1411 "development process" and "customization". The text element 1402 is segmented into the multiple words 1412, such as "master data", "user", "project", and "product". The text element 1404 is segmented into multiple words 1414, such as "prediction formula", "registration", "time", "at", "process", "ratio", and "of". The text element 1405 is segmented into multiple words 1415, such as "process", "ratio", "of", "input", "for", "decimal", "second place", "to", "input", "possible", and "is".

Using the dictionary 1300 of forcibly extracted words that registers a technical term that is a compound word including two or more morphemes, the morpheme analysis unit 1101 forcibly extracts, from the post-removal text 1201, the technical term registered in the dictionary 1300 of forcibly extracted words. Then, the morpheme analysis unit 1101 segments the post-removal text 1201 into the multiple words 1202, such that the multiple words 1202 include the technical term that has been extracted. Thus, the technical term that is a compound word is normally extracted without being segmented. In the example shown in Fig. 4, a technical term 1420 "master data" and the technical term 1421 "prediction formula" are forcibly extracted.

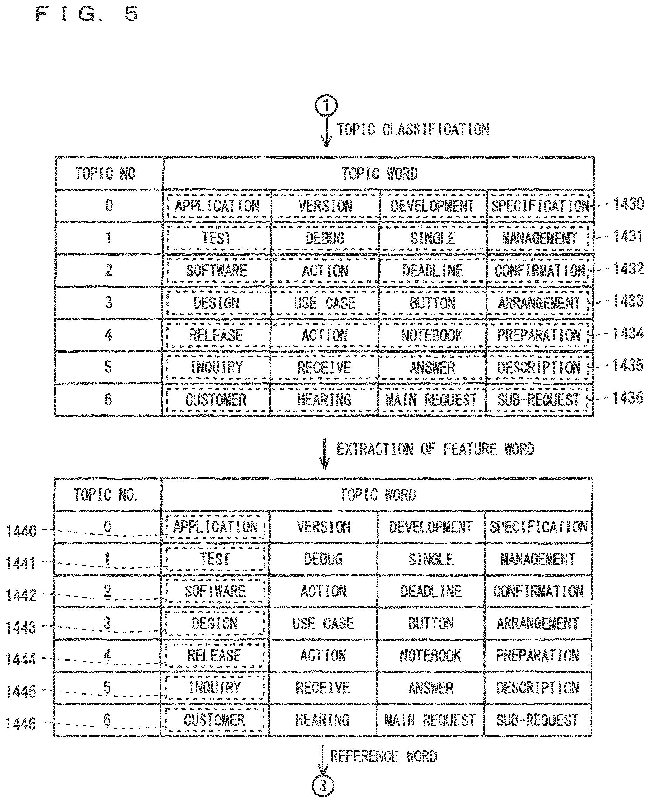

In step S103 following step S102 illustrated in Fig. 3, the extraction unit 1102 performs the topic classification on the morpheme-analyzed text 1203 and selects the at least one topic word belonging to each topic from the multiple words 1202. In the example illustrated in Fig. 5, multiple topic words 1430 "application", "version", "development", and "specification" belonging to a topic to which topic No. 0 is assigned are selected. Multiple topic words 1431 "test", "debug", "single", and "management" belonging to a topic to which topic No. 1 is assigned are selected. Multiple topic words 1432 "software", "response", "deadline", and "confirmation" belonging to a topic to which topic No. 2 is assigned are selected. Multiple topic words 1433 "design", "use case", "button", and "arrangement" belonging to a topic to which topic No. 3 is assigned are selected. Multiple topic words 1434 "release", "action", "notebook", and "preparation" belonging to a topic to which topic No. 4 is assigned are selected. Multiple topic words 1435 "inquiry", "receive", "answer", and "description" belonging to a topic to which topic No. 5 is assigned are selected. Multiple topic words 1436 "customer", "hearing", "main request", and "sub-request" belonging to a topic to which topic No. 6 is assigned are selected.

In step S103, the extraction unit 1102 extracts the feature word characterizing each topic from the at least one topic word belonging to each topic. The feature word that has been extracted is the reference word 1204 that is the reference for selecting the at least one similar word. In the example illustrated in Fig. 5, a feature word 1440 "application" is extracted from the multiple topic words 1430. A feature word 1441 "test" is extracted from the multiple topic words 1431. A feature word 1442 "software" is extracted from the multiple topic words 1432. A feature word 1443 "design" is extracted from the multiple topic words 1433. A feature word 1444 "release" is extracted from the multiple topic words 1434. A feature word 1445 "inquiry" is extracted from the multiple topic words 1435. A feature word 1446 "customer" is extracted from the multiple topic words 1436.

The extraction unit 1102 obtains a feature degree of each topic word that indicates a degree to which each topic word of the at least one topic word belonging to each topic characterizes each topic, and extracts the topic word having the highest feature degree as the feature word. The feature word that has been extracted is the reference word 1204. The feature degree of each topic word is determined to increase as a probability of appearance of each topic word in the topic increases, the probability being determined in the topic classification, and to decrease as frequency of appearance of each topic word in the text 1200 to be searched or analyzed increases. Desirably, the feature degree of each topic word is obtained by dividing the probability of each topic word in the topic by the frequency of appearance of each topic word in the text, as shown in Equation (1). Dividing by the frequency of appearance of each topic word in the text suppresses extraction, as the feature word, of a word that belongs to various topics and has a weak property characterizing each topic.

$$\text{Feature degree of each topic word} = \text{Probability of appearance of each topic}$$

$$\text{word in the topic/Frequency of appearance of each topic word in the text} \quad ... \quad (1)$$

The frequency of appearance of each topic word in the text is obtained by dividing the number of appearances of each topic word in the text by the number of words in the entire text, as shown in Equation (2).

$$\text{Frequency of appearance of each topic word in the text} = \text{Number of}$$

$$\text{appearances of each topic word in the text/Number of words in the entire text} \quad ... \quad (2)$$

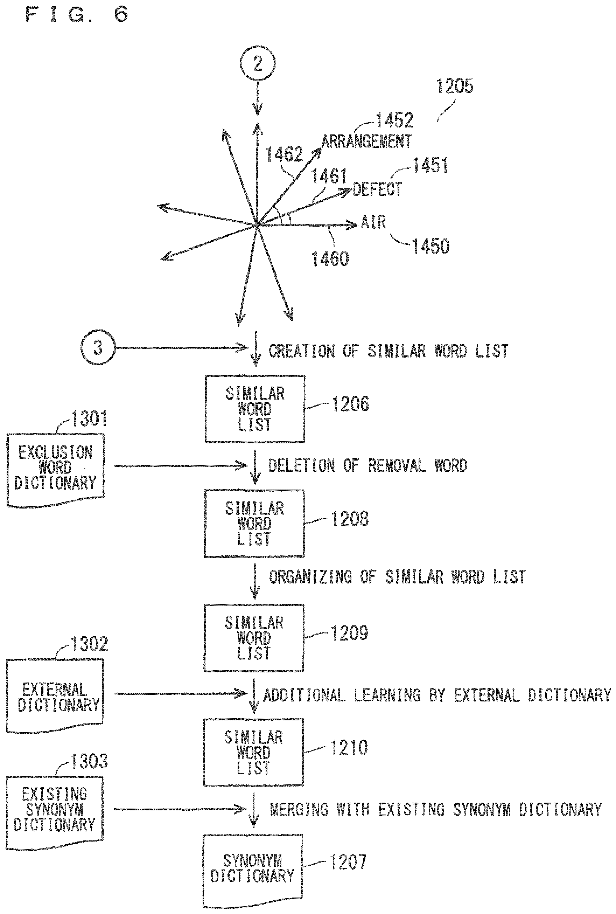

In step S104 following step S102, illustrated in Fig. 3, the multidimensional vectorization unit 1103 multidimensionally vectorizes the multiple words 1202 to obtain the multiple vectors 1205 respectively expressing the multiple words 1202. In the example illustrated in Fig. 6, vectors 1460, 1461, 1462, and the like respectively expressing a word 1450 "air", a word 1451 "defect", a word 1452 "arrangement", and the like are obtained.

The multidimensional vectorization unit 1103 multidimensionally vectorizes each word of the multiple words 1202 based on the probability of appearance of each word in the context. The multidimensional vectorization unit 1103 multidimensionally vectorizes a first word and a second word, such that a first vector and a second vector are directed to the same direction. The first vector and the second vector respectively express the first word and the second word that are included in the multiple words 1202, are used in the same manner, and appear in similar contexts. For example, a word "personal computer" has such a probability model as having a high probability of appearing in a context including peripheral words "software" and "install", and a low probability of appearing in a context including peripheral words "pot" and "boil". The word "PC" has the same probability model as the probability model of the word "personal computer". Thus, the vector expressing the word "PC" is directed in the same direction as the vector expressing the word "personal computer". On the other hand, the word "personal computer" has such a probability model as having a high probability of appearing in a context including peripheral words "software" and "install", and a low probability of appearing in a context including peripheral words "pot" and "boil". The word "ramen" has such a probability model as having a low probability of appearing in a context including peripheral words "software" and "install", and a high probability of appearing in a context including peripheral words "pot" and "boil". The probability model of the word "ramen" is different from the probability model of the word "personal computer". Therefore, the vector expressing the word "ramen" is directed in a different direction from the vector expressing the word "personal computer".

In step S105 following steps S103 and S104, illustrated in Fig. 3, the selection unit 1104 selects the at least one similar word from the multiple words 1202, and creates the similar word list 1206 including the at least one similar word that has been selected. The selection unit 1104 selects the at least one similar word, such that a similarity between a vector expressing the reference word 1204 and a vector expressing each similar word of the at least one similar word exceeds a set reference. In the example illustrated in Fig. 6, the similarity between the vector 1460 expressing the reference word 1450 "air" and the vector 1461 expressing the word 1451 "failure" exceeds the reference. The similarity between the vector 1460 expressing the reference word 1450 "air" and the vector 1462 expressing the word 1452 "arrangement" is lower than the reference. The similar word list 1206 that includes a similar word "defect" but does not include a dissimilar word "arrangement" is created.

Desirably, the selection unit 1104 selects the at least one similar word, such that a cos similarity between the vector expressing the reference word 1204 and the vector expressing each similar word exceeds a reference cos similarity, and is included in a set higher number of cos similarity of multiple cos similarities between the vector expressing the reference word 1204 and the multiple vectors 1205 respectively expressing the multiple words 1202. Similarities other than the cos similarity may be used for selection. For example, an angle may be used for selection.

In step S106 following step S105, illustrated in Fig. 3, using the exclusion word dictionary 1301 that registers the exclusion word that is unnecessary in the search or analysis, the creation unit 1105 deletes the exclusion word registered in the exclusion word dictionary 1301 from the similar word list 1206 to obtain a similar word list 1208 that has been updated. As a result, the creation unit 1105 creates the synonym dictionary 1207, such that the exclusion word registered in the exclusion word dictionary 1301 is not registered in the synonym dictionary 1207.

In step S107 following step S106, illustrated in Fig. 3, the creation unit 1105 organizes the similar word list 1208 to obtain a similar word list 1209 that has been updated.

In organizing the similar word list 1208, when the at least one similar word included in the similar word list 1208 has two or more overlapping similar words, the creation unit 1105 specifies a similar word to be deleted of the two or more overlapping similar words, and deletes this specified similar word to be deleted from a similarity list 1208. Thus, the creation unit 1105 creates the synonym dictionary 1207, such that the similar word specified to be deleted is not registered in the synonym dictionary 1207. The creation unit 1105 specifies the similar word to be left, such that the cos similarity between the vector expressing the reference word 1204 and the vector expressing the similar word to be left is the highest cos similarity of the two or more cos similarities between the vector expressing the reference word 1204 and the two or more vectors expressing the two or more overlapping similar words. Then, the similar word other than the similar word that has been specified to be left is the similar word to be deleted.

In organizing the similar word list 1208, when the at least one similar word included in the similar word list 1208 includes a similar word that overlaps the reference word 1204, the creation unit 1105 specifies a new reference word for the at least one similar word and replaces the reference word 1204 with the new reference word. The creation unit 1105 specifies the new reference word, such that the cos similarity between the vector expressing the reference word 1204 and a vector expressing the new reference word is the highest cos similarity of at least one cos similarity between the vector expressing the reference word 1204 and at least one vector respectively expressing the at least one similar word.

In step S108 following step S107, illustrated in Fig. 3, using the external dictionary 1302, the creation unit 1105 performs additional learning by the external dictionary 1302 to obtain a similar word list 1210 that has been updated. The creation unit 1105 adds, to the similar word list 1209, a similar word that is determined as being a synonym of the reference word 1204 in the external dictionary 1302 and is not included in the similar word list 1209, and deletes, from the similar word list 1209, a similar word that is determined as not being a synonym of the reference word 1204 in the external dictionary 1302 and is included in the similar word list 1209. As a result, the creation unit 1105 creates the synonym dictionary 1207, such that a similar word that is determined as being a synonym of the reference word 1204 in the external dictionary 1302 and is not included in the at least one similar word is registered in the synonym dictionary 1207, and a similar word that is determined as not being a synonym of the reference word 1204 in the external dictionary 1302 and is included in the at least one similar word is not registered in the synonym dictionary 1207. Words that are not registered in the external dictionary 1302, such as technical terms, are left in the similar word list 1210 as they are.

Step S109 following step S108, illustrated in Fig. 3, determines whether the existing synonym dictionary 1303 created from the text 1200 to be searched or analyzed or a text different from the text 1200 exists. When the synonym dictionary 1303 exists, the similar word list 1210 and the existing synonym dictionary 1303 are merged in step S110, and then the synonym dictionary 1207 is saved in step S111. When the existing synonym dictionary 1303 does not exist, the synonym dictionary 1207 is saved in step Sill.

In step S110, the creation unit 1105 merges the similar word list 1209 and the existing synonym dictionary 1303. Thus, the creation unit 1105 creates the synonym dictionary 1207, such that the similar word registered in the existing synonym dictionary 1303 is registered in the synonym dictionary 1207.

In step S111, the creation unit 1105 saves the synonym dictionary 1207.

In additional processing for a similarity list 1406 performed in steps S106 to S110, the synonym dictionary 1207 in which similar word groups covering similar words similar to the reference word 1204 are registered is created. At the same time, noise is removed from the synonym dictionary 1207.

4 Example of screen

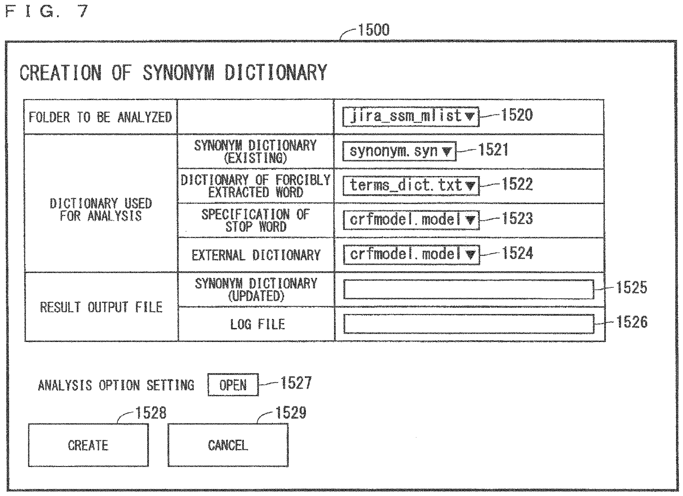

Fig. 7 is a schematic diagram illustrating an example of a screen displayed in the synonym dictionary creation apparatus according to the first embodiment.

A screen 1500 illustrated in Fig. 7 is displayed on the display 1043.

The screen 1500 includes a drop-down list 1520 that specifies a folder in which the text 1200 to be analyzed is stored, a drop-down list 1521 that specifies a file name of the existing synonym dictionary 1303, a drop-down list 1522 that specifies a file name of the dictionary 1300 of forcibly extracted words, a drop-down list 1523 that specifies a file name of the exclusion word dictionary 1301, a drop-down list 1524 that specifies a file name of the external dictionary 1302, a text box 1525 that specifies a file name of the synonym dictionary 1207, a text box 1526 that specifies a file name of a log file, a button 1527 that receives a call instruction on an analysis option setting screen, a button 1528 that receives a request for creating the synonym dictionary 1207, and a button 1529 that receives cancellation of creation of the synonym dictionary 1207. All or a part of the drop-down lists 1520 to 1524, the text boxes 1525 and 1526, and the buttons 1527 to 1529 may be replaced with another type of graphical user interface (GUI) part, or may be omitted.

Although the present invention has been described in detail, the above description is illustrative in all aspects, and the present invention is not limited thereto. It is understood that countless variations that are not illustrated can be envisaged without departing from the scope of the present invention.

Explanation of Reference Signs

    1000: synonym dictionary creation apparatus
    1020: synonym dictionary creation program
    1100: removal unit
    1101: morpheme analysis unit
    1102: extraction unit
    1103: multidimensional vectorization unit
    1104: selection unit
    1105: creation unit
    1106: storage unit
    1200: pre-removal text (text to be searched or analyzed)
    1201: post-removal text
    1202: multiple words
    1203: morpheme-analyzed text
    1204: reference word
    1205: multiple vectors
    1206, 1208, 1209, 1210: similar word list
    1207: synonym dictionary
    1300: dictionary of forcibly extracted words
    1301: exclusion word dictionary
    1302: external dictionary
    1303: existing synonym dictionary
    1400, 1401, 1402, 1403, 1404, 1405: text element
    1411, 1412, 1414, 1415: multiple words
    1420, 1421: technical term
    1430, 1431, 1432, 1433, 1444, 1435, 1436: multiple topic words
    1440, 1441, 1442, 1443, 1444, 1445, 1446: feature word
    1450, 1451, 1452: word
    1460, 1461, 1462: vector

**Claims**

**1.** A synonym dictionary creation apparatus comprising:

    a morpheme analysis unit that performs morpheme analysis on a text and segments said text into multiple words to obtain a morpheme-analyzed text;

an extraction unit that performs a topic classification on said morpheme-analyzed text, selects at least one topic word belonging to each topic from said multiple words, and extracts a reference word characterizing said each topic from said at least one topic word;

a multidimensional vectorization unit that multidimensionally vectorizes said multiple words to obtain multiple vectors that respectively express said multiple words;

a selection unit that selects at least one similar word from said multiple words such that a similarity between a vector expressing said reference word and a vector expressing each similar word of at least one similar word exceeds a set reference; and

a creation unit that creates a synonym dictionary that registers at least a part of said at least one similar word.

2. The synonym dictionary creation apparatus according to claim 1, further comprising a removal unit that removes a stop word from a pre-removal text to obtain said text.

3. The synonym dictionary creation apparatus according to claim 1 or 2, further comprising a storage unit that stores a dictionary of forcibly extracted words, the dictionary registering a compound word,
wherein said morpheme analysis unit segments said text such that said multiple words include said compound word.

4. The synonym dictionary creation apparatus according to any one of claims 1 to 3, wherein said extraction unit determines a feature degree of each topic word obtained from a division of a probability of each topic word of said at least one topic word in the topic by a frequency of appearance of said each topic word in said text, and extracts said reference word, such that a topic word having a highest feature degree is said reference word.

5. The synonym dictionary creation apparatus according to any one of claims 1 to 4, wherein said multidimensional vectorization unit, based on a probability of appearance of each word of said multiple words in a context, multidimensionally vectorizes said each word, and multidimensionally vectorizes a first word and a second word that are included in said multiple words and appear in a similar context, such that a first vector and a second vector that express said first word and said second word, respectively, are directed to a same direction.

6. The synonym dictionary creation apparatus according to any one of claims 1 to 5, wherein said similarity is a cos similarity.

7. The synonym dictionary creation apparatus according to any one of claims 1 to 6, wherein said selection unit selects said at least one similar word, such that said similarity exceeds a reference similarity, and is included in a set higher number of similarity of multiple similarities between a vector expressing said reference word and multiple vectors respectively expressing said multiple words.

8. The synonym dictionary creation apparatus according to any one of claims 1 to 7, further comprising a storage unit that stores an exclusion word dictionary that registers an exclusion word,
wherein said creation unit creates said synonym dictionary, such that said exclusion word is not registered in said synonym dictionary.

9. The synonym dictionary creation apparatus according to any one of claims 1 to 8, wherein, when said at least one similar word includes two or more overlapping similar words, said creation unit specifies a similar word to be deleted other than a similar word to be left of said two or more overlapping similar words, such that a similarity between the vector expressing said reference word and a vector expressing a similar word to be left is a highest similarity of two or more similarities between the vector expressing said reference word and two or more vectors respectively expressing said two or more overlapping similar words, and creates said synonym dictionary, such that said similar word to be deleted is not registered in said synonym dictionary.

10. The synonym dictionary creation apparatus according to any one of claims 1 to 9, wherein, when said at least one similar word includes a similar word overlapping said reference word, said creation unit specifies a new reference word for said at least one similar word, such that the similarity between the vector expressing said reference word and the vector expressing the new reference word is a highest similarity of at least one similarity between the vector expressing said reference word and at least one vector respectively expressing said at least one similar word, and replaces said reference word with said new reference word.

11. The synonym dictionary creation apparatus according to any one of claims 1 to 10, further comprising a storage unit that stores an external dictionary,

wherein said creation unit creates said synonym dictionary, such that a similar word that is determined as being a synonym of said reference word in said external dictionary and is not included in said at least one similar word is registered in said synonym dictionary, and a similar word that is determined as not being a synonym of said reference word in said external dictionary and included in said at least one similar word is not registered in said synonym dictionary.

12. The synonym dictionary creation apparatus according to any one of claims 1 to 11, further comprising a storage unit that stores an existing synonym dictionary that is created from said text or a text different from said text,
wherein said creation unit creates said synonym dictionary, such that a similar word registered in said existing synonym dictionary is registered in said synonym dictionary.

13. A synonym dictionary creation program that causes a computer to execute the steps of:

a) performing morpheme analysis on a text and segmenting said text into multiple words to obtain a morpheme-analyzed text;
b) performing a topic classification on said morpheme-analyzed text, selecting at least one topic word belonging to each topic from said multiple words, and extracting a reference word that characterizes said each topic from said at least one topic word;
c) multidimensionally vectoring said multiple words to obtain multiple vectors respectively expressing said multiple words;
d) selecting at least one similar word from said multiple words, such that a similarity between a vector expressing said reference word and a vector expressing each similar word of at least one similar word exceeds a set reference; and
e) creating a synonym dictionary that registers at least a part of said at least one similar word.

14. A synonym dictionary creation method comprising the steps of:

a) performing morpheme analysis on a text and segmenting said text into multiple words to obtain a morpheme-analyzed text;
b) performing a topic classification on said morpheme-analyzed text, selecting at least one topic word belonging to each topic from said multiple words, and extracting a reference word that characterizes said each topic from said at least one topic word;
c) multidimensionally vectorizing said multiple words to obtain multiple vectors respectively expressing said multiple words;
d) selecting at least one similar word from said multiple words, such that a similarity between a vector expressing said reference word and a vector expressing each similar word of at least one similar word exceeds a set reference; and
e) creating a synonym dictionary that registers at least a part of said at least one similar word.

F I G. 1

F I G. 2

F I G. 3

```
                        ┌──────────────────────────────┐
                        │  TEXT TO BE SEARCHED OR ANALYZED │──1200
                        └──────────────────────────────┘
                                      │
                                      ▼
                        ┌──────────────────────────────┐
                        │       REMOVE STOP WORD        │──S101
                        └──────────────────────────────┘
   ┌──────────┐                       │
   │DICTIONARY│──1300                 ▼
   │OF FORCIBLY│        ┌──────────────────────────────┐
   │EXTRACTED │────────▶│       MORPHEME ANALYSIS        │──S102
   │  WORDS   │         └──────────────────────────────┘
   └──────────┘                       │
                                      ▼
                        ┌──────────────────────────────┐
                        │     MORPHEME-ANALYZED TEXT     │──1203
                        └──────────────────────────────┘
```

S103 ┌─────────────────────────┐          ┌──────────────────────────────────────────┐ S104
     │   EXTRACT REFERENCE WORD │          │ MULTIDIMENSIONALLY VECTORIZE MULTIPLE WORDS │
     └─────────────────────────┘          └──────────────────────────────────────────┘

```
                        ┌──────────────────────────────┐
                        │     CREATE SIMILAR WORD LIST   │──S105
                        └──────────────────────────────┘
   ┌──────────┐                       │
   │EXCLUSION │──1301                 ▼
   │  WORD    │         ┌──────────────────────────────┐
   │DICTIONARY│────────▶│      DELETE EXCLUSION WORD      │──S106
   └──────────┘         └──────────────────────────────┘
                                      │
                                      ▼
                        ┌──────────────────────────────┐
                        │    ORGANIZE SIMILAR WORD LIST  │──S107
   ┌──────────┐         └──────────────────────────────┘
   │EXTERNAL  │──1302                 │
   │DICTIONARY│────────▶              ▼
   └──────────┘         ┌──────────────────────────────┐
                        │ ADDITIONAL LEARNING BY EXTERNAL DICTIONARY │──S108
                        └──────────────────────────────┘
                                      │
                                      ▼
                        ┌──────────────────────────────┐
                        │ EXISTING SYNONYM DICTIONARY EXISTS? │──S109
                        └──────────────────────────────┘     NO
   ┌──────────┐              │ YES                             │
   │EXISTING  │──1303        ▼                                 │
   │SYNONYM   │     ┌──────────────────────────────┐           │
   │DICTIONARY│────▶│ MERGE SIMILAR WORD LIST AND EXISTING │──S110 │
   └──────────┘     │       SYNONYM DICTIONARY       │           │
                    └──────────────────────────────┘           │
                                      │◀──────────────────────────┘
                                      ▼
                        ┌──────────────────────────────┐
                        │     SAVE SYNONYM DICTIONARY    │──S111
                        └──────────────────────────────┘
                                      │
                                      ▼
                        ┌──────────────────────────────┐
                        │    UPDATED SYNONYM DICTIONARY  │──1207
                        └──────────────────────────────┘
```

FIG. 4

# FIG. 5

① TOPIC CLASSIFICATION

| TOPIC NO. | TOPIC WORD | | | |
|---|---|---|---|---|
| 0 | APPLICATION | VERSION | DEVELOPMENT | SPECIFICATION | -- 1430 |
| 1 | TEST | DEBUG | SINGLE | MANAGEMENT | -- 1431 |
| 2 | SOFTWARE | ACTION | DEADLINE | CONFIRMATION | -- 1432 |
| 3 | DESIGN | USE CASE | BUTTON | ARRANGEMENT | -- 1433 |
| 4 | RELEASE | ACTION | NOTEBOOK | PREPARATION | -- 1434 |
| 5 | INQUIRY | RECEIVE | ANSWER | DESCRIPTION | -- 1435 |
| 6 | CUSTOMER | HEARING | MAIN REQUEST | SUB-REQUEST | -- 1436 |

↓ EXTRACTION OF FEATURE WORD

| TOPIC NO. | TOPIC WORD | | | |
|---|---|---|---|---|
| 1440 -- 0 | APPLICATION | VERSION | DEVELOPMENT | SPECIFICATION |
| 1441 -- 1 | TEST | DEBUG | SINGLE | MANAGEMENT |
| 1442 -- 2 | SOFTWARE | ACTION | DEADLINE | CONFIRMATION |
| 1443 -- 3 | DESIGN | USE CASE | BUTTON | ARRANGEMENT |
| 1444 -- 4 | RELEASE | ACTION | NOTEBOOK | PREPARATION |
| 1445 -- 5 | INQUIRY | RECEIVE | ANSWER | DESCRIPTION |
| 1446 -- 6 | CUSTOMER | HEARING | MAIN REQUEST | SUB-REQUEST |

↓ REFERENCE WORD

③

# F I G. 6

②

1205

1452
ARRANGEMENT

1462

1461 — 1451
DEFECT

AIR

1450

1460

③ → CREATION OF SIMILAR WORD LIST

SIMILAR WORD LIST — 1206

1301
EXCLUSION WORD DICTIONARY → DELETION OF REMOVAL WORD

SIMILAR WORD LIST — 1208

ORGANIZING OF SIMILAR WORD LIST

SIMILAR WORD LIST — 1209

1302
EXTERNAL DICTIONARY → ADDITIONAL LEARNING BY EXTERNAL DICTIONARY

SIMILAR WORD LIST — 1210

1303
EXISTING SYNONYM DICTIONARY → MERGING WITH EXISTING SYNONYM DICTIONARY

SYNONYM DICTIONARY — 1207

FIG. 7

—1500

## CREATION OF SYNONYM DICTIONARY

| FOLDER TO BE ANALYZED | | jira_ssm_mlist ▼ —1520 |
|---|---|---|
| DICTIONARY USED FOR ANALYSIS | SYNONYM DICTIONARY (EXISTING) | synonym.syn ▼ —1521 |
| | DICTIONARY OF FORCIBLY EXTRACTED WORD | terms_dict.txt ▼ —1522 |
| | SPECIFICATION OF STOP WORD | crfmodel.model ▼ —1523 |
| | EXTERNAL DICTIONARY | crfmodel.model ▼ —1524 |
| RESULT OUTPUT FILE | SYNONYM DICTIONARY (UPDATED) | —1525 |
| | LOG FILE | —1526 |

ANALYSIS OPTION SETTING [ OPEN ]—1527

—1528            —1529

[ CREATE ]      [ CANCEL ]

<div align="center">

**INTERNATIONAL SEARCH REPORT**

</div>

| | International application No. |
|---|---|
| | PCT/JP2018/024837 |

**A. CLASSIFICATION OF SUBJECT MATTER**
Int.Cl. G06F17/27(2006.01)i, G06F17/30(2006.01)i

According to International Patent Classification (IPC) or to both national classification and IPC

**B. FIELDS SEARCHED**

Minimum documentation searched (classification system followed by classification symbols)
Int.Cl. G06F17/27, G06F17/30

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 梶 博行, 森本 泰嗣, 相薗 敏子, テキストコーパスからのトピック階層の抽出, 情報処理学会論文誌, IPSJ Journal, 15 February 2003, vol. 44, no. 2, pp. 405-420, (KAJI, Hiroyuki, MORIMOTO, Yasutsugu, AIZONO, Toshiko, Extracting a topic hierarchy from a text corpus) | 1–14 |
| A | 城光 英彰, 松田 源立, 山口 和紀, 文脈限定 Skip-gram による同義語獲得に関する研究, 言語処理学会第 22 回年次大会発表論文集 [online], Proceedings of the Twenty-second Annual Meeting of the Association for Natural Language Processing, 29 February 2016, pp. 717-720, (JOKO, Hideaki, MATSUDA, Yoshitatsu, YAMAGUCHI, Kazunori), non-official translation (A study on automatic synonym acquisition using a context-restricted skip-gram model) | 1–14 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13.09.2018 | 25.09.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11312168 A

- JP 2013016011 A